# EUROPÄISCHE PATENTSCHRIFT

(11) **EP 2 731 241 B1**
(45) Veröffentlichungstag und Bekanntmachung des Hinweises auf die Patenterteilung: **14.09.2016**
(21) Anmeldenummer: 12007596.5
(22) Anmeldetag: 08.11.2012
(51) Int. Cl.: H02K 37/04, H02K 37/06, H02K 41/03, H02K 1/14

(54) **Elektromotor mit verbesserter Induktivität**
Electric motor with improved inductance
Moteur électrique avec inductance améliorée

(43) Veröffentlichungstag der Anmeldung: 14.05.2014
(73) Patentinhaber: Elegant Ideas Foundation, 9490 Vaduz (LI)
(72) Erfinder: Zatsarinin, Sergey, 644089 Omsk (RU)
(74) Vertreter: Schultheiss & Sterzel Patentanwälte PartG mbB

(56) Entgegenhaltungen:
- EP-A1- 0 254 347
- EP-A2- 0 343 845
- DE-A1- 4 445 038
- GB-A- 1 206 555

## Beschreibung

Die Erfindung betrifft einen elektrischen Motor, insbesondere einen Reluktanzmotor aufweisend einen Anker, beinhaltend ein magnetisierbares Material, wobei der Anker eine Mehrzahl von Polschuhen aufweist und einen Aktor, der beweglich gegen den Anker angeordnet und gelagert ist, der ein magnetisierbares Material beinhaltet und der zumindest zwei magnetisierbare Polenden aufweist.

Die Erfindung betrifft auch ein Verfahren zur Herstellung eines elektrischen Motors, insbesondere eines Reluktanzmotors und die Verwendung eines elektrischen Motors, insbesondere eines Reluktanzmotors

Die Erfindung gehört zum Gebiet der Elektrotechnik und betrifft insbesondere Reluktanzmotoren mit hohem Drehmoment. Vorgestellt wird eine Bauart von kontaktfreien elektrischen Reluktanzmaschinen (Reluktanzmotoren) und die in einem breiten Drehzahlbereich der Maschinenwelle (von einigen Umdrehungen pro Minute bis mehreren Hunderttausenden Umdrehungen pro Minute) arbeiten kann und dazu in Systemen der Automatik, in autonomen Systemen der Elektroausrüstung, in Raumtechnik, im Luft- und Strassenverkehr, als gesteuerte und ungesteuerte Fahrzeugmotoren verwendet werden kann.

Das durch Anwendung dieser Erfindung erreichte technische Ergebnis besteht im Gewinn einer zuverlässigen und technologisch hochwertigen Konstruktion des kontaktfreien Reluktanzmotors mit hohen Energiewerten und Betriebseigenschaften beim breiten Drehzahlbereich der Maschinenwelle und hoher spezifischen Leistung. Eine große Anzahl verschiedener Elektromotoren ist aus dem Stand der Technik bekannt. Dabei werden Spulen von einem Strom durchflossen, um ein magnetisches Feld zu erzeugen. Das magnetische Feld wird dazu meist in einem magnetisierbaren Eisenkern erzeugt, der als Anker dient. Ein Rotor, der drehbar in den wechselnden magnetischen Feldern gelagert ist, ist selbst magnetisch oder zumindest magnetisierbar. Dadurch wird eine Wechselwirkung zwischen den Wechselfeldern des Ankers und des Rotors möglich, so dass eine Bewegung des Rotors erzwungen wird. Alternativ kann ebenso der Anker bewegt werden.

Ferner ist auch ein Erzeugen einer linearen Bewegung durch Elektromotoren möglich, wobei der Rotor dann in der vorliegenden Erfindung auch als Aktor bezeichnet wird und der im Stand der Technik häufig auch als Läufer bezeichnet wird. Die Begriffe Aktor und Läufer sind damit äquivalent. Ebenso ist der Anker ein Stator im Sinne der vorliegenden Erfindung.

Ein Schrittschaltmotor ist beispielsweise aus der GB 1 206 845 A bekannt. Der dort beschriebene Schrittschaltmotor weist Spulenwicklungen auf Statorpolbrücken auf, wodurch Statormagnetpole mit wechselnder Polarität erregbar sind.

Es sind Reluktanzmotoren in kontaktfreier Ausführung bekannt. Aber diese Motoren weisen unbefriedigende Werte hinsichtlich Masse und Abmessungen auf, und die bisherigen Verbesserungsversuche führen zu einer wesentlichen Komplizierung der Motorkonstruktion. Ein solcher elektrischer Motor ist beispielsweise aus der EP 0 343 845 A2 bekannt.

Beim Schalten der Spulen erfolgen ein Aufbau oder ein Abbau des magnetischen Felds und damit eine Hysterese, die die Schaltgeschwindigkeit des Motors begrenzt. Beim Einschalten der Induktivität in den Gleichstromkreis entsteht dort - nach dem Lenz'schen Gesetz - Selbstinduktionsspannung, die der Änderung des Stromes im Kreis entgegenwirkt, indem sie die Stromsteigerung sowie den Stromabfall beim Öffnen des Stromkreises verlangsamt. Der Strom kann nicht sofort und unmittelbar auf den Nennwert steigen, und folglich steigt das Drehmoment des Motors nicht sehr schnell sondern asymptotisch bzw. exponentiell. Bei niedrigen Drehgeschwindigkeiten kann der Strom in der Motorwicklung nach Aufschalten des Spannungsimpulses seinen Nennwert erreichen, und das Moment des Motors entspricht annähernd dem Leistungsparameter. Doch beim Versuch der Erhöhung der Drehgeschwindigkeit steigt nicht nur die Geschwindigkeit der Kommutierung der Wicklungen, sondern es verringert sich die Zeit des Anlegens der Spannung an die Wicklung. Ab einer kritischen Geschwindigkeit kann der Strom in der Wicklung nicht mehr auf den Nennwert steigen, bevor die Wicklung schon wieder entspannt wird. Daraus resultiert eine nachteilige Verminderung des Drehmoments, der Motor beginnt die Schritte zu überspringen und bleibt letzten Endes stehen.

Die Aufgabe der Erfindung besteht also darin, die Nachteile des Stands der Technik zu überwinden. Insbesondere soll ein möglichst schnell schaltender Elektromotor bereitgestellt werden. Der Elektromotor soll möglichst ein gleichmäßiges mittleres Moment erzeugen und bei Drehmotoren dieses über einen möglichst großen Drehbereich bereitstellen. Zudem soll der Aufbau des Motors möglichst einfach und kostengünstig sein. Weitere Aufgaben ergeben sich ohne weiteres aus den Nachteilen nicht erfindungsgemäßer Elektromotoren beziehungsweise aus den Vorteilen erfindungsgemäßer Motoren.

Die Aufgaben der Erfindung werden gelöst durch einen elektrischer Motor, insbesondere einen Reluktanzmotor aufweisend einen Anker, beinhaltend ein magnetisierbares Material, wobei der Anker eine Mehrzahl von Polschuhen aufweist, einen Läufer, der beweglich gegen den Anker angeordnet und gelagert ist, der ein magnetisierbares Material beinhaltet und der zumindest zwei magnetisierbare Polenden aufweist und eine geradzahlige Anzahl von Spulen, die zwischen den Polschuhen angeordnet sind und deren Wicklungen den Anker derart umschließen, dass sich die Spulen bereichsweise entlang des Ankers erstrecken, so dass der Anker mit Hilfe der Spulen magnetisierbar ist, wobei die Spulen derart elektrisch verschaltet sind, dass bei Anlegen einer elektrischen Spannung an den Spulen die magnetischen Felder, die durch zwei zu einem Polschuh benachbarten Spulen erzeugt werden, derart ausgerichtet sind, dass an dem dazwischen angeordneten Polschuh die gleiche magnetische Polarisierung durch beide Spulen entsteht.

Der Anker weist zumindest zwei Polschuhe auf. Zwei Polschuhe können für einen ringförmigen Anker ausreichend sein.

Es ist vorgesehen, dass die Spulen derart elektrisch verschaltet sind, dass bei Anlegen einer elektrischen Spannung an den Spulen die magnetischen Felder, die durch zwei zu einem Polschuh benachbarten Spulen erzeugt werden, derart ausgerichtet sind, dass an dem dazwischen angeordneten Polschuh die gleiche magnetische Polarisierung durch beide Spulen entsteht.

Dies kann beispielsweise dadurch erreicht werden, dass zwei benachbarte Spulen gegensinnig gewickelt und in Reihe geschaltet sind. Alternativ dazu ist es auch möglich zwei benachbarte Spulen gleichsinnig zu wickeln und parallel zu schalten. Eine gegensinnige Windung der Spulen wird erreicht, indem eine Spule links herum die andere rechts herum auf den Anker aufgewickelt wird. Die eine Spule weist also eine Linkswindung, die andere Spule eine Rechtswindung auf.

Durch die erfindungsgemäße Verschaltung der Spulen können sich die induzierten magnetischen Felder und damit die gegenseitig induzierten elektrischen Ströme in den Spulen gegenseitig kompensieren, so dass unerwünschte Trägheitseffekte des erfindungsgemäßen Motors vermieden werden.
die Spulen auf dem Anker elektrisch paarweise gegenläufig und magnetisch paarweise parallel (gleichläufig) angeschlossen sind.

Es kann erfindungsgemäß auch vorgesehen sein, dass der Anker und/oder der Läufer aus einem magnetisierbaren Material besteht oder bestehen und/oder das magnetisierbare Material des Ankers und/oder des Läufers eine magnetische Permeabilität von zumindest 100 H/m aufweist, bevorzugt eine magnetische Permeabilität von zumindest 1000 H/m, besonders bevorzugt eine magnetische Permeabilität von zumindest 10.000 H/m aufweist.

Bei diesen Werten ist ein erfindungsgemäßer Elektromotor bei hohem Wirkungsgrad betreibbar.

Es kann auch vorgesehen sein, dass die Anzahl der Polschuhe gleich der Anzahl der Polenden ist.

Diese Ausführungsform ist besonders für erfindungsgemäße Reluktanzmotoren mit drehbarem Anker geeignet.

Ferner kann vorgesehen sein, dass die Anzahl der Spulen gleich der Anzahl der Polschuhe ist und/oder die Anzahl der Spulen ein ganzzahliges Vielfaches der Anzahl der Polschuhe ist.

Gemäß einer besonders bevorzugten Weiterbildung der Erfindung kann vorgesehen sein, dass der Anker ringförmig ist, wobei der ringförmige Anker eine geradzahlige Anzahl von Polschuhen aufweist und der Läufer ein Rotor ist, der drehbar zum ringförmigen Anker gelagert ist, vorzugsweise drehbar im Inneren des ringförmigen Ankers gelagert ist, wobei sich die Spulen bereichsweise entlang des Umfangs des ringförmigen Ankers erstrecken, so dass der ringförmige Anker mit Hilfe der Spulen magnetisierbar ist.

Durch die hohe Symmetrie eines ringförmigen Ankers wirkt sich die erfindungsgemäße Lehre besonders vorteilhaft aus. Je höher die Symmetrie der Spulen ist, desto besser sind diese miteinander gekoppelt, so dass weniger störende Induktionsströme auftreten.

Bei solchen Elektromotoren kann dabei vorgesehen sein, dass der Rotor eine ganzzahlige Anzahl von magnetisierbaren Polen aufweist.

Diese Ausführung trägt ebenfalls zur Vorteilhaften Symmetrie des Aufbaus bei.

Auch kann vorgesehen sein, dass jeweils so viele Spulen zwischen zwei Polschuhen um ringförmigen Anker angeordnet sind, die einem ganzzahligen Vielfachen der Anzahl der Polschuhe entsprechen.

Mit diesem Aufbau können auch mehr als eine Spule zwischen den Polschuhen angeordnet werden.

Eine Weiterbildung der Erfindung kann vorsehen, dass der ringförmige Anker und/oder der Rotor eine geradzahlige Drehsymmetrie um die Drehachse des Rotors aufweist oder aufweisen, die gleich der geradzahligen Anzahl der Polschuhe des ringförmigen Ankers und/oder der geradzahligen Anzahl der Polenden des Rotors ist.

Auch hierdurch werden die Symmetrie des Gesamtaufbaus und insbesondere die Symmetrie der magnetisierbaren Strukturen weiter verbessert, was zu einer weiteren Beschleunigung des Schaltungsverhaltens des erfindungsgemäßen Motors führt.

Auch kann vorgesehen sein, dass in der Drehachse des Rotors eine Antriebsachse angeordnet ist, um die der Rotor drehbar in dem ringförmigen Anker gelagert ist.

Gemäß einer alternativen Ausgestaltungsform der Erfindung kann vorgesehen sein, dass der elektrische Motor ein Linear-Motor mit einem linearen Anker ist, und der lineare Anker eine ungeradzahlige Anzahl von Polschuhen aufweist, wobei zwischen jedem Polschuh wenigstens eine Spule angeordnet ist, vorzugsweise zwischen jedem Polschuh eine Spule angeordnet ist.

Die äußeren Polschuhe des Ankers des linearen Motors tragen nicht zur Bewegung des Läufers bei. Die aus den äußeren Polschuhen austretenden magnetischen Felder sind schwächer als die aus den inneren Polschuhen austretenden magnetischen Felder, die beidseitig von Spulen flankiert werden. Es ist erfindungsgemäß bevorzugt, dass der Aufbau des Ankers des linearen Motors symmetrisch ist zumindest bezüglich der Anzahl und Form der Pole und in Bezug auf eine Spiegelebene in der Mitte des Ankers senkrecht zur linearen Ausdehnung des Ankers.

Die Umsetzung eines erfindungsgemäßen Linearmotors weist die gleichen Vorteile auf wie die Umsetzung als Rotationsmotor.

Dabei kann vorgesehen sein, dass der lineare Anker einen Polschuh mehr aufweist, als Spulen auf den linearen Motor gewickelt sind und zwischen zwei benachbarten Polschuhen des Ankers genau eine Spule angeordnet ist.

Diese Maßnahme dient dem symmetrischen Aufbau des Motors mit den bereits geschilderten Vorteilen.

Gemäß einer Weiterbildung der Erfindung kann auch vorgesehen sein, dass zwischen zwei Polschuhen des Ankers immer die gleiche Anzahl von Spulenwindungen durch die Spulen gewickelt ist.

Hierdurch wird die Symmetrie der Spulen zueinander erhöht.

Dabei kann vorgesehen sein, dass die Anzahl der Windungen der Spulen zwischen allen Polschuhen bis auf wenigstens 45° einer Windung identisch ist, vorzugsweise bis auf wenigstens 45° identisch ist, besonders bevorzugt bis auf wenigstens 5° identisch ist, wodurch eine weitere Verbesserung der Symmetrie des Aufbaus erreicht wird.

Bei erfindungsgemäßen Motoren kann allgemein erfindungsgemäß vorgesehen sein, dass der elektrische Leiter, aus dem die Spulen gewickelt sind einen gleichmäßigen Querschnitt aufweist, insbesondere eine Querschnitt mit einer Querschnittsabweichung von höchstens 20%, bevorzugt von höchstens 10%, besonders bevorzugt von höchstens 2%.

Da dies der Symmetrie des Elektronenflusses durch die Spulenwindungen zuträglich ist, ist auch diese Maßnahme zur weiteren Verbesserung des erfindungsgemäßen Aufbaus geeignet.

Auch kann erfindungsgemäß vorgesehen sein, dass das magnetisierbare Material des Ankers und/oder des Läufers aus elektrisch leitenden und voneinander elektrisch isolierten Schichten besteht, vorzugsweise aus elektrisch voneinander isolierten Stahlschichten, wobei zwischen den elektrisch leitenden Schichten ein Isolator angeordnet ist, vorzugsweise Kunststoffschichten zwischen den elektrisch leitenden Schichten angeordnet sind.

Hierdurch wird ein besonders gut magnetisierbares Material bereitgestellt, mit dem der Wirkungsgrad eines erfindungsgemäßen Aufbaus weiter verbessert werden kann.

Die der Erfindung zugrundeliegenden Aufgaben werden auch gelöst durch ein Verfahren zur Herstellung eines elektrischen Motors, insbesondere eines Reluktanzmotors, vorzugsweise nach einem der vorangehenden Ansprüche, bei dem eine geradzahlige Anzahl von Spulen auf einen Anker beinhaltend ein magnetisierbares Material aufgebracht werden, wobei die Spulen zwischen einer Vielzahl von Polschuhen angeordnet werden, so dass die Wicklungen der Spulen den Anker derart umschließen, dass sich die Spulen bereichsweise entlang des Ankers erstrecken, ein Läufer beinhaltend ein magnetisierbares Material mit zumindest zwei Polenden beweglich gegen den Anker gelagert wird.

Dabei kann vorgesehen sein, dass die Spulen derart elektrisch miteinander verschaltet werden, dass bei Anlegen einer elektrischen Spannung an den Spulen die magnetischen Felder, die durch zwei zu einem Polschuh benachbarten Spulen erzeugt werden, derart ausgerichtet sind, dass an dem dazwischen angeordneten Polschuh die gleiche magnetische Polarisierung an dem Polschuh von den beiden benachbarten Spulen erzeugt wird.

Erfindungsgemäße Verfahren können sich auch durch die Realisierung aller geeigneten Merkmale des Elektromotors auszeichnen, die bereits zuvor geschildert wurden.

Schließlich werden die der Erfindung zugrundeliegende Erkenntnisse auch realisiert durch die Verwendung eines elektrischen solchen Motors, insbesondere eines solchen Reluktanzmotors zum Antreiben einer Bewegung einer Vorrichtung oder eines Teils einer Vorrichtung.

Der Erfindung liegt die überraschende Erkenntnis zugrunde, dass die Spulen nicht um die Polschuhe des Ankers des Reluktanzmotors gewickelt werden sondern um den Anker selbst. Dadurch können sich die Induktionsströme in den Spulen des Elektromotors gegenseitig kompensieren. Dies wirkt sich insbesondere bei einer geeigneten Verschaltung der Spulen miteinander besonders vorteilhaft aus.

Durch die Erfindung wird eine wesentliche Senkung der Induktivität der Ankerwicklung erreicht, was zu einer Erhöhung der Geschwindigkeit des Stromanstiegs in der Ankerwicklung führt und folglich auch die Schalthäufigkeit des Stroms in der Ankerwicklung, die Umdrehungszahl des Rotors und dadurch eine höhere abgegebene und spezifische Leistung des Elektromotors ermöglicht. Die Senkung der Induktivität der Ankerwicklung, die in einem zweistelligen Bereich liegt, verleiht dem Eingangswiderstand der Ankerspule außerdem einen aktiven Charakter, und schließt weitgehend die Entstehung störender Selbstinduktionsspannungen aus, was die Zuverlässigkeit der Arbeit von Schaltstufen des elektronischen Schalters wesentlich erhöht. Ferner kann der Motor mit bedeutend weniger Spannung gespeist werden, was durch ein fast völliges Fehlen der Reaktanz der Ankerwicklung erreicht wird. Auch ein störendes Aussenden von elektromagnetischen Wellen durch den Motor sowohl durch die Luft, als auch durch die elektrischen Leitungen kann durch einen erfindungsgemäßen Elektromotor äußerst weitgehend vermieden werden. Dadurch ist der erfindungsgemäße Elektromotor auch zusammen mit empfidlicher Elektronik oder in sensiblen Umgebungen einsetzbar, die normalerweise emfindlich auf solche Störungen reagieren.

Somit weist der vorliegende Reluktanzmotor folgende Vorteile auf:
Einfache Konstruktion: Der Rotor und der Stator sind als Pakete aus weichmagnetischem Blechmaterial ausgeführt. Der Rotor hat keine Wicklungen und Dauermagnete. Die Wicklungen hat nur der Stator. Zur Minderung des Aufwands können die Spulen der Ankerwicklungen getrennt gefertigt und später auf den geteilten Magnetkörper des Ankers gesetzt werden.

Eine hohe spezifische Arbeitsleistung des Motors ist linear proportional dem Quadrat der Rotationsgeschwindigkeit und ist bei den vorliegenden Elektromotoren nur begrenzt durch die Stabilität des Aufbaus und die Festigkeit der Materialien. Die errechnete Arbeitsleistung kann im zweistelligen kW-Bereich pro 1 kg des Motors liegen. Diese Arbeitsleistung pro kg des Motors kann durch andere Elektromotoren nicht erreicht werden.

Kein mechanischer Schalter: Der Stellmagnet des Elektromotors wird durch hocheffektive Halbleiterkraftschalter gesteuert - Transistoren, IGBT bzw. MOSFET (HEXFET), deren Sicherheit und Zuverlässigkeit beträchtlich grösser ist als die von beliebigen mechanischen Teilen; z.B. Kollektoren, Bürsten, Lager.

Keine Dauermagnete. Reluktanzmotoren haben weder im Rotor, noch im Stator Dauermagnete, so dass der erfindungsgemäße Elektromotor mit seinen Leistungsmerkmalen erfolgreich mit Stromrichtermotoren mit Dauermagneten konkurrieren kann und dadurch wesentlich einfacher aufzubauen ist. Bei gleichen elektrischen Daten und bezüglich Gewicht und/oder Abmessungen kostet der Reluktanzmotor im Durchschnitt um das 4-fache weniger, hat wesentlich höhere Sicherheit, einen breiteren Drehzahlbereich, einen breiteren Betriebstemperaturbereich. Vom Konstruktionsprinzip her hat der Reluktanzmotor grundsätzlich keine Leistungsbegrenzungen.

Der Rotor weist keine Wicklungen auf und kann als Paket aus weichmagnetischem Blechmaterial, z. B. aus gewöhnlichem Dynamoblech, ausgeführt werden.

Für die Herstellung des Reluktanzmotors benötigt man um das 2- bis 3-fache weniger Kupfer als für Kollektormotoren gleicher Leistung und um 1,3-fache weniger Kupfer als für einen Asynchronmotor.

Die Wärmeentwicklung erfolgt hauptsächlich im Stator (Anker), dabei werden durch eine abgedichtete Konstruktion, Luft- oder Wasserkühlung leicht realisierbar. Im Betriebszustand braucht der Rotor keine Kühlung. Für die Abkühlung des Reluktanzmotors reicht die Kühlung der äußeren Statoroberfläche (Ankeroberfläche) aus.

Der erfindungsgemäße Reluktanzmotor kann mit einem hohlen Rotor hergestellt werden. Die Dicke des Rotorrückens muss dabei mindestens die Hälfte der Polbreite betragen. Die Masse/Abmessungen des Elektromotors, seine Leistung beim Sollmoment und Drehzahlbereich können mittels Abstimmung der Stator- und Rotorpolzahl optimiert werden.

Die Einfachheit der Konstruktion des erfindungsgemäßen Reluktanzmotors verringert den Aufwand bei seiner Herstellung. Grundsätzlich kann er sogar in Betrieben hergestellt werden, die nicht auf dem Gebiet des Elektromaschinenbaus spezialisiert sind. Für die Serienfertigung von Reluktanzmotoren braucht man nur eine gewöhnliche mechanische Ausrüstung - Stanzen für Fertigung der Stator- und Rotorblechkerne, Dreh- und Fräsmaschinen zur Bearbeitung der Welle und Gehäusesteile reichen bereits aus. Der erfindungsgemäßen Konstruktion fehlen aufwändige und technologisch komplizierte Herstellungsschritte, wie z. B. die Herstellung eines Kollektors und Bürsten des Kollektormotors oder ein Ausguss des Rotorkäfigs vom Asynchronmotor. Nach vorläufiger Einschätzung beträgt der kostenmäßige und zeitmäßige Aufwand bei der Herstellung eines Reluktanzmotors um 70% weniger als der beim Kollektormotor und um 40% weniger als der beim Asynchronmotor.

Ein weiterer Vorteil ist in der flexiblen Bauweise zu sehen. Dank der Einfachheit der Ankerwicklung und dem Fehlen der Windungen und der Magnete am Rotor wird die hohe Flexibilität der Bauweise des Reluktanzmotors gewährleistet. Der Aufbau des Elektromotors kann flach, länglich, invers oder linear sein. Zur Produktion einer ganzen Reihe von Elektromotoren verschiedener Leistung kann man ein und denselben Stanzensatz für Ausstanzen von Rotor und Stator (Anker) anwenden, da es zur Leistungssteigerung reicht, die Länge des Rotor- und Statorsatzes entsprechend zu vergrößern. Es ist nicht schwer, die Maschine mit dem Stator sowohl außerhalb des Rotors als auch umgekehrt zu fertigen sowie die Elektronik ins Maschinengehäuse einzubauen.

Die Einfachheit der Konstruktion sichert dem Reluktanzmotor höhere Zuverlässigkeit als die der anderen Typen von Elektromaschinen.

Ein breiter Drehzahlbereich (von einigen Umdrehungen pro Minute bis hunderten Umdrehungen pro Minute) kann mit dem erfindungsgemäßen Elektromotor realisiert werden.

Eine hohe Nutzwirkung wird in einem breiten Drehzahlbereich erreicht, da die Spule keine Gegenkraft erzeugt.

Mit erfindungsgemäßen Elektromotoren ist eine bequeme Verbindung mit moderner Digitalelektronik möglich.

Da erfindungsgemäße Reluktanzmotoren durch unipolare Impulse gespeist (angeregt) werden, ist für die Steuerung ein einfacher elektronischer Schalter ausreichend. Mittels einer Steuerung des Impulsschaltverhältnisses von Hochstromtransistoren des elektronischen Schalters kann die Form der Stromimpulse von Phasenwicklungen des Elektromotors stufenlos geändert werden. Die natürliche mechanische Charakteristik des Reluktanzmotors wird durch Rückstoßprinzip der Funktionsweise der elektrischen Maschine bestimmt und gleicht einer Hyperbelform. Das Hauptmerkmal dieser Charakteristik - eine mittlere Leistungskonstanz an der Maschinenwelle - erweist sich als außerordentlich nützlich für Elektroantriebe mit begrenzter Quellenleistung, da dabei die Bedingung ihrer Unterbelastbarkeit realisiert wird. Die Anwendung eines geschlossenen Steuersystems mit Rückmeldungen nach Geschwindigkeit und Belastung ermöglicht den Erhalt von mechanischen Charakteristiken beliebiger vorgegebener Form, einschließlich absolut starre Formen (astatische Formen), und führt zu keiner Komplizierung des Steuersystems, da sein Prozessor über große Redundanz an Schnelligkeit und Speicher verfügt. Das Feld der erfindungsgemäß zugänglichen mechanischen Charakteristiken deckt praktisch durchgehend alle vier Quadranten der Moment-Geschwindigkeits-Ebene innerhalb des Begrenzungsgebiets eines spezifischen Elektroantriebs ab.

Der Preis für einen Reluktanzmotor ist der niedrigste unter allen bekannten Konstruktionen von elektrischen Motoren. Und schließlich steigt die Effizienz des erfindungsgemäßen Reluktanzmotors infolge des wesentlich kleineren Energieverbrauchs, der durch den hohen Wirkungsgrad des Elektromotors und Anwendung der Sparsteuerungsstrategien in dynamischen Betriebsweisen bedingt ist.

Dank der kontaktfreien Schaltung, hoher mechanischer Beanspruchbarkeit und Festigkeit des Rotors kann der erfindungsgemäße Reluktanzmotor in erster Linie für Fahrzeuganlagen angeboten werden, die unter besonders schwierigen Einsatzbedingungen betrieben werden (z. B. Autos, Geländewagen, Industrietraktoren). Sie kann auch bei Industrieanlagen eingesetzt werden. Hierdurch ist eine gute industrielle und gewerbliche Anwendbarkeit der erfindungsgemäßen Lösung gegeben.

Erfindungsgemäße sind beispielsweise Elektromotoren, bestehend aus einem Ankerkern mit ausgeprägten Ankerpolen, gefertigt als geschichtetes Paket aus isolierten Dynamoblechen, wobei die Zahl der Ankerpole ist mindestens 2n (n ist eine Ganze Zahl), zwischen ausgeprägten Polen des Ankers, am Magnetkörper, befindet sich die Ankerwicklung, in der jede Spule den Magnetkörper zwischen ausgeprägten Polen des Ankers umschlingt. Der wicklungslose Rotor enthält die Welle, auf der sich der Magnetkörper des Rotors mit Polkanten befindet, gefertigt als geschichtetes Paket aus isolierten Dynamoblechen, die Zahl der Rotorpole ist der Zahl der Ankerpole gleich.

Die Wirkungsweise des Ankers des erfindungsgemäßen Reluktanzmotors zeichnet sich dadurch aus, dass die Ankerwicklung aus zwei gleichen Spulen mit gleicher Windungszahl und dem Kabel vom gleichen Querschnitt besteht, die den entgegengesetzten Wickelsinn haben und hintereinander so geschaltet sind, dass der durch die genannten Spulen fließende Arbeitsstrom einen Magnetstrom durch gleichsinnige Pole erzeugt. Eine solche Schaltung der Spulen (bifilar) zeichnet sich durch minimal mögliche Gesamtinduktivität und fast völlige Kompensierung der Selbstinduktionsspannung von einzelnen Spulen aus. Auf solche Weise erzeugen die Spulen der Ankerwicklung den doppelten Magnetstrom in Ankerpolen, dabei haben sie minimale Induktivität und keine Selbstinduktionsspannung an Wicklungsenden, wodurch man die Betriebseigenschaften des Elektromotors beträchtlich verbessern, hohe Energiekennziffer beim breiten Drehzahlbereich der Welle und hohe spezifische Leistung erreichen kann.

Im Folgenden werden Ausführungsbeispiele der Erfindung anhand von sieben schematisch dargestellten Figuren erläutert, ohne jedoch dabei die Erfindung zu beschränken. Dabei zeigt:
Figur 1: eine schematische perspektivische Darstellung eines erfindungsgemäßen Elektromotors mit zwei Polschuhen;
Figur 2: eine schematische perspektivische Darstellung eines erfindungsgemäßen Elektromotors mit vier Polschuhen;
Figur 3: eine schematische perspektivische Darstellung eines langestreckten erfindungsgemäßen Elektromotors mit zwei Polschuhen;
Figur 4: eine schematische perspektivische Darstellung eines erfindungsgemäßen Elektromotors mit zwei Polschuhen, bei dem der Rotor außen um den Anker herum angeordnet ist;
Figur 5: eine schematische perspektivische Darstellung eines erfindungsgemäßen Elektromotors mit jeweils zwei Polschuhen, bei dem mehrere Einheiten an einer Rotorachse angeschlossen sind;
Figur 6: eine schematische perspektivische Darstellung eines erfindungsgemäßen Linearmotors; und
Figur 7: ein Diagramm eines Oszilloskops, das an einem erfindungsgemäßen Motor nach Figur 2 aufgenommen wurde.

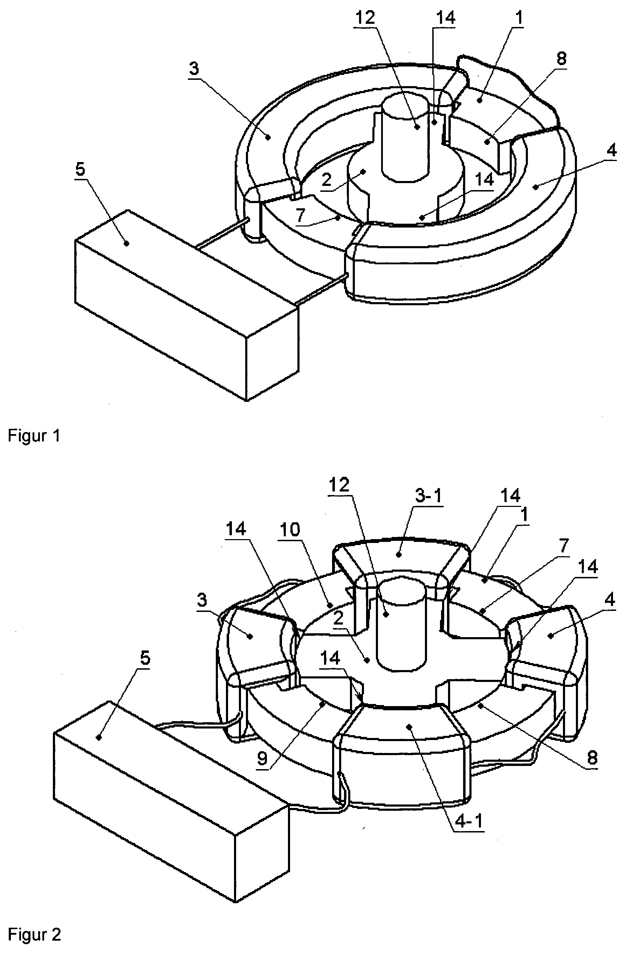

Die Figur 1 zeigt eine perspektivische Darstellung eines erfindungsgemäßen Reluktanzmotors. Der Reluktanzmotor weist einen ringförmig geschlossenen Anker 1 aus geschichtetem Stahl auf. Im inneren des ringförmigen Ankers 1 ist ein Rotor 2 angeordnet, der drehbar in dem ringförmigen Anker 1 gelagert ist und der ebenfalls aus geschichtetem Stahl gefertigt ist. Einander gegenüberliegend sind zwei Spulen 3, 4 auf den ringförmigen Anker 1 gewickelt, die sich entlang des Umfangs des ringförmigen Ankers 1 also entlang der länglichen Ausdehnung des Ankers 1 erstecken. Die Spulen 3, 4 sind aus Kupfer gewickelt und von einem Gehäuse umgeben. Genaugenommen ist in Figur 1 nur das Gehäuse um die Spulen 3, 4 zu erkennen.

Die Windungen des Drahts werden um die Torus-Oberfläche des ringförmigen Ankers 1 gewickelt. Der ringförmige Anker 1 kann zunächst zweiteilig vorliegen und erst nach dem Aufwickeln der beiden Spulen 3, 4 zu dem gezeigten Torus zusammengefügt werden.

Eine Steuereinheit 5 dient der Steuerung der Spannungsversorgung der Spulen 3, 4. Zwischen den Spulen 3, 4 sind an dem ringförmigen Anker 1 zwei Polschuhe 7, 8 ausgeformt, die sich bereichsweise ins Innere des ringförmigen Ankers 1 in Richtung des Rotors 2 erstrecken. Die Spulen 3, 4 sind entgegengesetzt gewickelt und in Reihe geschaltet. Die Spulen 3, 4 sind also spiegelbildlich zueinander auf dem ringförmigen Anker 1 angeordnet. Durch diese Anordnung und Verschaltung der Spulen 3, 4 miteinander wird an den beiden Polschuhen 7, 8 eine entgegengesetzte und wechselnde magnetische Polung erzeugt.

Die gestellte Aufgabe der Erfindung wird also beispielsweise dadurch gelöst, dass der Stator/Anker 1 der kontaktfreien elektrischen Maschine nach Figur 1 über einen Ankerkern mit ausgeprägten Polschuhen 7, 8 des ringförmigen Ankers 1 verfügt, der als geschichtetes Paket aus voneinander isolierten Dynamoblechen gefertigt ist, wobei die Zahl der Ankerpolschuhe 7, 8 mindestens zwei, bzw. durch 2 teilbar ist. Zwischen ausgeprägten Polschuhen 7, 8 des Ankers 1, am Magnetkörper 1, befindet sich die Ankerwicklung, in der jede Spule 3, 4 den Magnetkörper 1 zwischen den ausgeprägten Polschuhen 7, 8 des Ankers 1 umschließt. Die Spulen 3, 4 der Ankerwicklung sind paarweise Stromgegensinnig und paarweise Magnetstromparallel geschaltet. Der wicklungslose Rotor 2 enthält die Welle 12 als Drehachse des Rotors 2, auf der sich der Magnetkörper des Rotors 2 mit Polkanten 14 befindet. Der Rotor 2 ist ebenfalls als geschichtetes Paket aus isolierten Dynamoblechen gefertigt, wobei die Zahl der Rotorpolenden 14 gleich der Zahl der Ankerpole 7, 8 ist.

Die Ankerwicklung besteht aus zwei gleichen Spulen 3, 4 mit gleicher Windungszahl gefertigt aus einem Draht mit gleichmäßigem Querschnitt in den Grenzen des Herstellungsverfahrens, wie beispielsweise der Wicklungsvorrichtung. Die Spulen 3, 4 haben einen entgegengesetzten Wickelsinn, also eine entgegengesetzte Windung und sind hintereinander so geschaltet, dass der durch die genannten Spulen fließende Arbeitsstrom einen Magnetstrom erzeugt, der eine gleichsinnige magnetische Polung der Polschuhe 7, 8 verursacht. Zum Beispiel: Nordpol 7 und Südpol 8. Bei der Umkehrung der Stromrichtung erfolgt der gegensinnige Wechsel der Magnetpole. Der Anker 1 dieses Motors ist ein magnetisierbarer Toroidmagnetkörper (Magnetring) mit zwei (bzw. durch 2 teilbaren) identischen Wicklungen, die symmetrisch auf dem Magnetkörper liegen, gegensinnig geschaltet (Variante der Bifilarwicklung) und durch fast totale Gegeninduktion miteinander gekoppelt sind.

Eine solche Schaltung der Spulen 3, 4 (bifilare Schaltung) zeichnet sich durch eine minimal mögliche Gesamtinduktivität und fast vollständige Kompensierung der Selbstinduktionsspannung von einzelnen Spulen 3, 4 aus. Auf diese Weise wird die gestellte Aufgabe gelöst - die Spulen 3, 4 der Ankerwicklung erzeugen den doppelten Magnetstrom in Ankerpolschuhen 7, 8, dabei haben sie minimale Induktivität und verursachen keine Selbstinduktionsspannung an Wicklungsenden. Die Gesamtinduktivität und die daraus resultierende Selbstinduktionsspannung des Aufbaus werden durch die Ähnlichkeit der elektrischen und geometrischen Eigenschaften der Spulen 3, 4 bestimmt.

Die Motorspeisung, Erzeugung von Arbeitsstromimpulsen, Synchronisierung der Phase der Arbeitsstromimpulsgabe erfolgt durch die Steuereinheit 5 nach Signalen eines Positionsgebers (in Figur 1 nicht gezeigt) des Rotors 2 und ist ohne Besonderheiten.

Figur 2 zeigt eine schematische perspektivische Darstellung eines erfindungsgemäßen Elektromotors mit vier Polschuhen 7, 8, 9, 10. Der Elektromotor verfügt über einen Ankerkern mit ausgeprägten Polschuhen 7, 8, 9, 10 des ringförmigen Ankers 1, der als geschichtetes Paket aus voneinander isolierten Dynamoblechen gefertigt ist, wobei die Zahl der Ankerpolschuhe 7, 8, 9, 10 durch 2 teilbar ist. Zwischen ausgeprägten Polschuhen 7, 8, 9, 10 des Ankers 1, am Magnetkörper 1, befindet sich die Ankerwicklung, in der jede Spule 3, 4, 3-1, 4-1 den Magnetkörper 1 zwischen den ausgeprägten Polschuhen 7, 8, 9, 10 des Ankers 1 umschließt. Die Spulen 3, 4, 3-1, 4-1 der Ankerwicklung sind paarweise Stromgegensinnig und paarweise Magnetstromparallel geschaltet. Der wicklungslose Rotor 2 enthält die Welle 12 als Drehachse des Rotors 2, auf der sich der Magnetkörper des Rotors 2 mit Polkanten 14 befindet. Der Rotor 2 ist ebenfalls als geschichtetes Paket aus isolierten Dynamoblechen gefertigt, wobei die Zahl der Rotorpolenden 14 gleich der Zahl der Ankerpole 7, 8, 9, 10 ist.

Die Ankerwicklung besteht aus vier gleichen Spulen 3, 4, 3-1, 4-1 mit gleicher Windungszahl gefertigt aus einem Draht mit gleichmäßigem Querschnitt in den Grenzen des Herstellungsverfahrens, wie beispielsweise der Wicklungsvorrichtung. Die Spulen 3, 4, 3-1, 4-1 haben einen entgegengesetzten Wickelsinn, also eine entgegengesetzte Windung und sind hintereinander so geschaltet, dass der durch die genannten Spulen 3, 4, 3-1, 4-1 fließende Arbeitsstrom einen Magnetstrom erzeugt, der eine gleichsinnige magnetische Polung der Polschuhe 7, 9 und der Polschuhe 8, 10 verursacht. Zum Beispiel: Nordpol 7 und 9 und Südpol 8 und 10. Bei der Umkehrung der Stromrichtung erfolgt der gegensinnige Wechsel der Magnetpole.

Es ist aus der Erfindung ersichtlich, dass auch ohne weiteres eine größere ganzzahlige Anzahl von Polschuhen und Spulen realisiert werden kann.

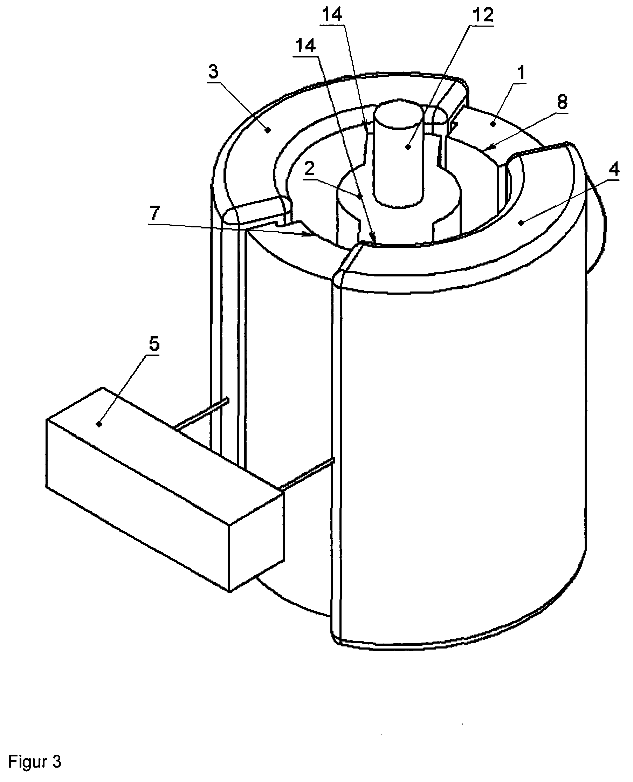

Figur 3 zeigt eine schematische perspektivische Darstellung eines langestreckten erfindungsgemäßen Elektromotors mit zwei Polschuhen 7, 8. Der Elektromotor verfügt über einen Ankerkern mit ausgeprägten Polschuhen 7, 8 des ringförmigen Ankers 1, der als geschichtetes Paket aus voneinander isolierten Dynamoblechen gefertigt ist, wobei die Zahl der Ankerpolschuhe 7, 8 durch 2 teilbar ist. Zwischen ausgeprägten Polschuhen 7, 8 des Ankers 1, am Magnetkörper 1, befindet sich die Ankerwicklung, in der jede Spule 3, 4 den Magnetkörper 1 zwischen den ausgeprägten Polschuhen 7, 8 des Ankers 1 umschließt. Die Spulen 3, 4 der Ankerwicklung sind paarweise Stromgegensinnig und paarweise Magnetstromparallel geschaltet. Der wicklungslose Rotor 2 enthält die Welle 12 als Drehachse des Rotors 2, auf der sich der Magnetkörper des Rotors 2 mit Polkanten 14 befindet. Der Rotor 2 ist ebenfalls als geschichtetes Paket aus isolierten Dynamoblechen gefertigt, wobei die Zahl der Rotorpolenden 14 gleich der Zahl der Ankerpole 7, 8 ist.

Die Ankerwicklung besteht aus zwei gleichen Spulen 3, 4 mit gleicher Windungszahl gefertigt aus einem Draht mit gleichmäßigem Querschnitt in den Grenzen des Herstellungsverfahrens, wie beispielsweise der Wicklungsvorrichtung. Die Spulen 3, 4 haben einen entgegengesetzten Wickelsinn, also eine entgegengesetzte Windung und sind hintereinander so geschaltet, dass der durch die genannten Spulen 3, 4 fließende Arbeitsstrom einen Magnetstrom erzeugt, der eine gleichsinnige magnetische Polung der Polschuhe 7, 8 verursacht. Zum Beispiel: Nordpol 7 und Südpol 8. Bei der Umkehrung der Stromrichtung erfolgt der gegensinnige Wechsel der Magnetpole.

Es sind also mit der Erfindung langgestreckte ebenso wie flache Motoren realisierbar.

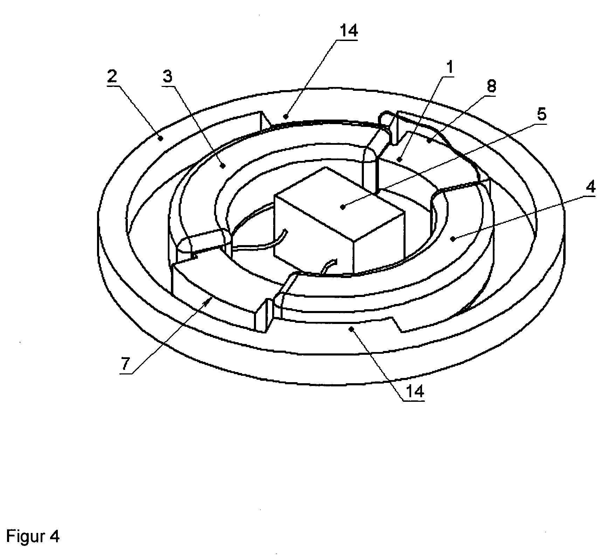

Figur 4 zeigt eine schematische perspektivische Darstellung eines erfindungsgemäßen Elektromotors mit zwei Polschuhen 7, 8, bei dem der Rotor 2 außen um den Anker 1 herum angeordnet ist. Der Elektromotor verfügt über einen Ankerkern mit ausgeprägten Polschuhen 7, 8 des ringförmigen Ankers 1, der als geschichtetes Paket aus voneinander isolierten Dynamoblechen gefertigt ist, wobei die Zahl der Ankerpolschuhe 7, 8 durch 2 teilbar ist. Die Polschuhe 7, 8 sind dabei nach außen in Richtung des Rotors 2 gerichtet. Zwischen ausgeprägten Polschuhen 7, 8 des Ankers 1, am Magnetkörper 1, befindet sich die Ankerwicklung, in der jede Spule 3, 4 den Magnetkörper 1 zwischen den ausgeprägten Polschuhen 7, 8 des Ankers 1 umschließt. Die Spulen 3, 4 der Ankerwicklung sind paarweise Stromgegensinnig und paarweise Magnetstromparallel geschaltet. Der wicklungslose Rotor 2 enthält die Welle 12 als Drehachse des Rotors 2, auf der sich der Magnetkörper des Rotors 2 mit Polkanten 14 befindet. Der Rotor 2 ist ebenfalls als geschichtetes Paket aus isolierten Dynamoblechen gefertigt, wobei die Zahl der Rotorpolenden 14 gleich der Zahl der Ankerpole 7, 8 ist.

Die Ankerwicklung besteht aus zwei gleichen Spulen 3, 4 mit gleicher Windungszahl gefertigt aus einem Draht mit gleichmäßigem Querschnitt in den Grenzen des Herstellungsverfahrens, wie beispielsweise der Wicklungsvorrichtung. Die Spulen 3, 4 haben einen entgegengesetzten Wickelsinn, also eine entgegengesetzte Windung und sind hintereinander so geschaltet, dass der durch die genannten Spulen 3, 4 fließende Arbeitsstrom einen Magnetstrom erzeugt, der eine gleichsinnige magnetische Polung der Polschuhe 7, 8 verursacht. Zum Beispiel: Nordpol 7 und Südpol 8. Bei der Umkehrung der Stromrichtung erfolgt der gegensinnige Wechsel der Magnetpole.

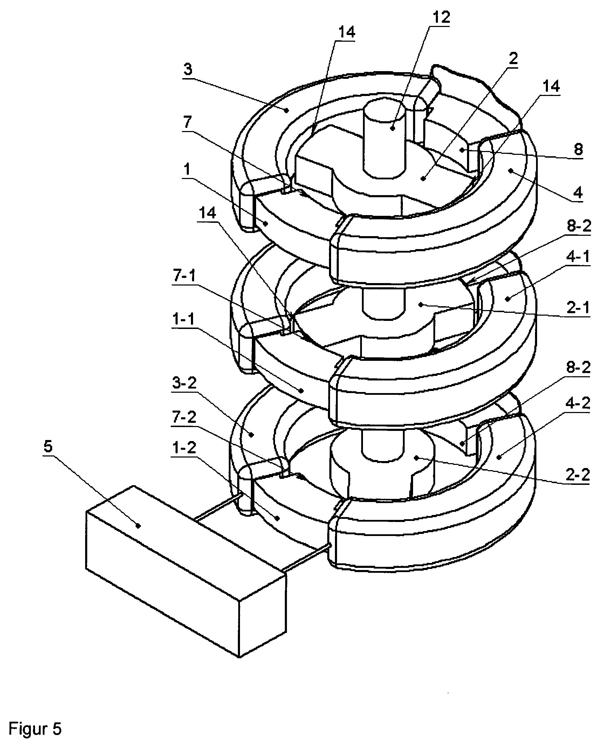

Figur 5 zeigt eine schematische perspektivische Darstellung eines erfindungsgemäßen Elektromotors mit jeweils zwei Polschuhen 7, 8, 7-1, 8-1, 7-2, 8-2, bei dem mehrere Einheiten an einer Rotorachse 12 angeschlossen sind. Die Polenden 14 der Rotoren 2, 2-1, 2-2 sind gegeneinander versetzt, so dass immer ein Drehmoment auf der Rotorachse 12 erzeugt werden kann. Der Elektromotor verfügt über drei Ankerkerne mit ausgeprägten Polschuhen 7, 8, 7-1, 8-1, 7-2, 8.2 des ringförmiger Anker 1, 1-1, 1-2, die als geschichtete Pakete aus voneinander isolierten Dynamoblechen gefertigt sind, wobei die Zahl der Ankerpolschuhe 7, 8, 7-1, 8-1, 7-2, 8-2 für jeden der drei Teile durch 2 teilbar ist. Die Polschuhe 7, 8, 7-1, 8-1, 7-2, 8-2 sind dabei nach innen in Richtung der Rotoren 2, 2-1, 2-2 gerichtet. Zwischen ausgeprägten Polschuhen 7, 8, 7-1, 8-1, 7-2, 8-2 der Anker 1, 1-1, 1-2, am Magnetkörper 1, 1-1, 1-2, befinden sich die Ankerwicklungen, in der jede Spule 3, 4, 3-1, 4-1, 3-2, 4-2 die Magnetkörper 1, 1-1, 1-2 zwischen den ausgeprägten Polschuhen 7, 8, 7-1, 8-1, 7-2, 8-2 der Anker 1, 1-1, 1-2 umschließen. Die Spulen 3, 4, 3-1, 4-1, 3-2, 4-2 der Ankerwicklung sind paarweise Stromgegensinnig und paarweise Magnetstromparallel geschaltet. Die wicklungslose Rotoren 2, 2-1, 2-2 sind zentral an die Welle 12 als Drehachse der Rotoren 2, 2-1, 2-2 angeschlossen, auf der sich die Magnetkörper der Rotoren 2, 2-1, 2-2 mit Polkanten 14 befinden. Die Rotoren 2, 2-1, 2-2 sind ebenfalls als geschichtetes Paket aus isolierten Dynamoblechen gefertigt, wobei die Zahl der Rotorpolenden 14 gleich der Zahl der Ankerpolen 7, 8, 7-1, 8-1, 7-2, 8-2 ist.

Die Ankerwicklungen bestehen aus jeweils zwei gleichen Spulen 3, 4, 3-1, 4-1, 3-2, 4-2 mit gleicher Windungszahl gefertigt aus einem Draht mit gleichmäßigem Querschnitt in den Grenzen des Herstellungsverfahrens, wie beispielsweise der Wicklungsvorrichtung. Die Spulen 3, 4, 3-1, 4-1, 3-2, 4-2 haben einen entgegengesetzten Wickelsinn, also eine entgegengesetzte Windung und sind hintereinander so geschaltet, dass der durch die genannten Spulen 3, 4, 3-1, 4-1, 3-2, 4-2 fließende Arbeitsstrom einen Magnetstrom erzeugt, der eine gleichsinnige magnetische Polung der Polschuhe 7, 8, 7-1, 8-1, 7-2, 8-2 verursacht. Zum Beispiel: Nordpole 7, 7-1, 7-2 und Südpole 8, 8-1, 8-2. Bei der Umkehrung der Stromrichtung erfolgt der gegensinnige Wechsel der Magnetpole.

Die Merkmale der erfindungsgemäßen Ausführungsbeispiele nach den Figuren 1 bis 5 lassen sich ohne weiteres miteinander kombinieren und erweitern, so dass eine große Anzahl verschiedener Ausführungsformen der Erfindung vorstellbar ist.

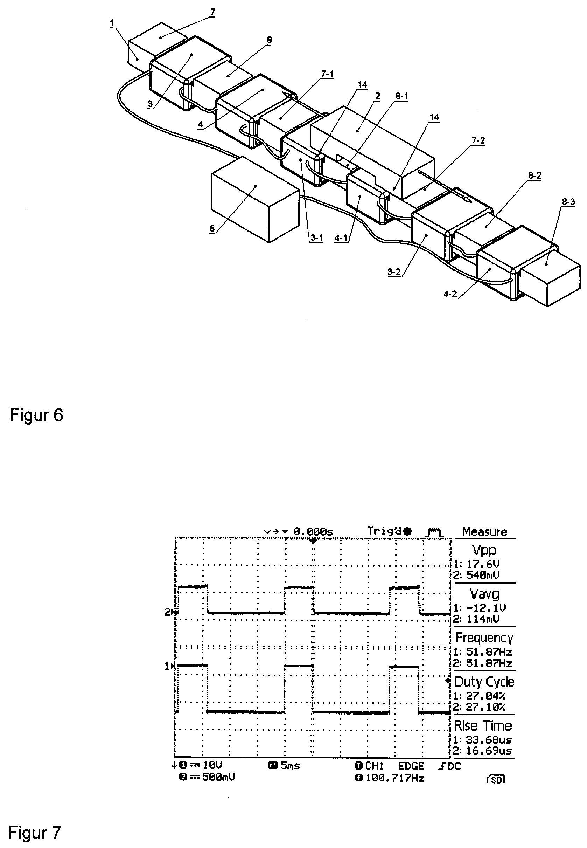

Figur 6 zeigt eine schematische perspektivische Darstellung eines erfindungsgemäßen Linearmotors mit einem Anker 1 und einer Reihe linear hintereinander aufgebauter Polschuhe 7, 8, 7-1, 8-1, 7-2, 8-2, 8-3 und Spulen 3, 4, 3-1, 4-1, 3-2, 4-2. Ein Läufer 2 oder Aktor 2 kann auf dem Anker 1 hin und her bewegt werden. Mit diesem Linearmotor lassen sich beispielsweise automatische Türen, Schiebetüren, Roboterarme, usw. betätigen.

Der Elektromotor verfügt über einen Ankerkern mit sieben ausgeprägten Polschuhen 7, 8, 7-1, 8-1, 7-2, 8-2, 8-3 des linearen Ankers 1, der als geschichtetes Paket aus voneinander isolierten Stahlblechen gefertigt ist, wobei die Zahl der Ankerpolschuhe 7, 8, 7-1, 8-1, 7-2, 8-2, 8-3 ungerade, also nicht durch zwei teilbar ist. Zwischen ausgeprägten Polschuhen 7, 8, 7-1, 8-1, 7-2, 8-2, 8-3 des Ankers 1, am Magnetkörper 1, befindet sich die Ankerwicklung, in der jede Spule 3, 4, 3-1, 4-1, 3-2, 4-2 den Magnetkörper 1 zwischen den ausgeprägten Polschuhen 7, 8, 7-1, 8-1, 7-2, 8-2, 8-3 des Ankers 1 umschließt. Die Spulen 3, 4, 3-1, 4-1, 3-2, 4-2 der Ankerwicklung sind paarweise Stromgegensinnig und paarweise Magnetstromparallel geschaltet. Der wicklungslose Läufer 2 umfasst zwei Polkanten 14. Bei dem Aufbau als linearer Motor ist es möglich den Läufer mit einer ungeradzahligen Anzahl von Polkanten zu realisieren (in Figur 6 nicht gezeigt). Der Läufer 2 ist ebenfalls als geschichtetes Paket aus isolierten Dynamoblechen gefertigt, wobei die Zahl der Rotorpolenden 14 hier unabhängig von der Zahl der Ankerpole 7, 8 ist.

Die Ankerwicklung besteht aus sechs gleichen Spulen 3, 4, 3-1, 4-1, 3-2, 4-2 mit gleicher Windungszahl gefertigt aus einem Draht mit gleichmäßigem Querschnitt in den Grenzen des Herstellungsverfahrens, wie beispielsweise der Wicklungsvorrichtung. Die Spulen 3, 4, 3-1, 4-1, 3-2, 4-2 haben einen entgegengesetzten Wickelsinn, also eine entgegengesetzte Windung und sind hintereinander so geschaltet, dass der durch die genannten Spulen 3, 4, 3-1, 4-1, 3-2, 4-2 fließende Arbeitsstrom einen Magnetstrom erzeugt, der eine abwechselnde magnetische Polung der Polschuhe 7, 8, 7-1, 8-1, 7-2, 8-2, 8-3 verursacht. Zum Beispiel: Nordpol 7, 7-1, 7-2, 8-3 und Südpol 8, 8-1, 8-2. Bei der Umkehrung der Stromrichtung erfolgt der gegensinnige Wechsel der Magnetpole.

Zwecks Prüfung der Leistungsfähigkeit des Gegenstandes der Erfindung wurde das Muster des beschriebenen Motors nach Figur 2 gefertigt, das die vorteilhaft Motoreigenschaften bestätigt hat. In Figur 7 ist ein Oszillogramm von an die Ankerwicklung (CH1) angelegten Spannungsimpulsen und des durch diese Spannung erzeugten Stromes (CH2) durch die Ankerwicklung dargestellt. Wie man aus Oszillogramm sehen kann, beträgt die Frontlänge des Stromimpulses durch die Ankerwicklung 0,016 ms und wird im Wesentlichen anhand der Frontlänge des Impulses der angelegten Spannung bestimmt, was ein fast völliges Fehlen der Induktivität der Ankerwicklung ermöglicht und so praktisch den aktiven Widerstand zu berücksichtigen. Bei einer solchen Frontlänge des Stromimpulses durch die Ankerwicklung ist die Impulsperiode der Speisung von 0,1 ms durchaus erreichbar, was 10.000 Impulse pro Sekunde ermöglicht. Mit vier Polen des Ankers und Rotors kann die Rotordrehzahl 150.000 Umdrehungen pro Minute betragen.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1: Anker / magnetisierbarer Ring
- 2, 2-1, 2-2: Läufer / Aktor / Rotor
- 3, 4, 3-1, 3-2: Spule
- 4-1,4-2: Spule
- 5: Steuereinheit / Spannungsquelle
- 7, 8, 9, 10: Polschuh
- 7-1,7-2: Polschuh
- 8-1,8-2,8-3: Polschuh
- 12: Rotorachse
- 14: Magnetisierbare Polende des Rotors

## Patentansprüche

1. Elektrischer Motor, insbesondere Reluktanzmotor aufweisend
einen Anker (1), beinhaltend ein magnetisierbares Material, wobei der Anker (1) eine Mehrzahl von Polschuhen (7, 8, 9, 10, 7-1, 7-2, 8-1, 8-2, 8-3) aufweist,
einen Läufer (2, 2-1, 2-2), der beweglich gegen den Anker (1) angeordnet und gelagert ist, der ein magnetisierbares Material beinhaltet und der zumindest zwei magnetisierbare Polenden (14) aufweist und
eine geradzahlige Anzahl von Spulen (3, 3-1, 3-2, 4, 4-1, 4-2), die zwischen den Polschuhen (7, 8, 9, 10, 7-1, 7-2, 8-1, 8-2, 8-3) angeordnet sind und deren Wicklungen den Anker (1) derart umschließen, dass sich die Spulen (3, 3-1, 3-2, 4, 4-1, 4-2) bereichsweise entlang des Ankers (1) erstrecken, so dass der Anker (1) mit Hilfe der Spulen (3, 3-1, 3-2, 4, 4-1, 4-2) magnetisierbar ist, **dadurch gekennzeichnet, dass**
die Spulen (3, 3-1, 3-2, 4, 4-1, 4-2) derart elektrisch verschaltet sind, dass bei Anlegen einer elektrischen Spannung an den Spulen (3, 3-1, 3-2, 4, 4-1, 4-2) die magnetischen Felder, die durch zwei zu einem Polschuh (7, 8, 9, 10, 7-1, 7-2, 8-1, 8-2, 8-3) benachbarten Spulen (3, 3-1, 3-2, 4, 4-1, 4-2) erzeugt werden, derart ausgerichtet sind, dass an dem dazwischen angeordneten Polschuh (7, 8, 9, 10, 7-1, 7-2, 8-1, 8-2, 8-3) die gleiche magnetische Polarisierung durch beide Spulen (3, 3-1, 3-2, 4, 4-1, 4-2) entsteht.

2. Elektrischer Motor nach Anspruch 1, **dadurch gekennzeichnet, dass**
die Spulen (3, 3-1, 3-2, 4, 4-1, 4-2) auf dem Anker (1) elektrisch paarweise gegenläufig und magnetisch paarweise parallel angeschlossen sind.

3. Elektrischer Motor nach einem der vorangehenden Ansprüche, **dadurch gekennzeichnet, dass**
der Anker (1) und/oder der Läufer (2, 2-1, 2-2) aus einem magnetisierbaren Material besteht oder bestehen und/oder das magnetisierbare Material des Ankers (1) und/oder des Läufers (2, 2-1, 2-2) eine magnetische Permeabilität von zumindest 100 H/m aufweist, bevorzugt eine magnetische Permeabilität von zumindest 1000 H/m, besonders bevorzugt eine magnetische Permeabilität von zumindest 10.000 H/m aufweist.

4. Elektrischer Motor nach einem der vorangehenden Ansprüche, **dadurch gekennzeichnet, dass**
die Anzahl der Polschuhe (7, 8, 9, 10, 7-1, 7-2, 8-1, 8-2) gleich der Anzahl der Polenden (14) ist.

5. Elektrischer Motor nach einem der vorangehenden Ansprüche, **dadurch gekennzeichnet, dass**
die Anzahl der Spulen (3, 3-1, 3-2, 4, 4-1, 4-2) gleich der Anzahl der Polschuhe (7, 8, 9, 10, 7-1, 7-2, 8-1, 8-2) ist und/oder die Anzahl der Spulen (3, 3-1, 3-2, 4, 4-1, 4-2) ein ganzzahliges Vielfaches der Anzahl der Polschuhe (7, 8, 9, 10, 7-1, 7-2, 8-1, 8-2) ist.

6. Elektrischer Motor nach einem der vorangehenden Ansprüche, **dadurch gekennzeichnet, dass**
der Anker (1) ringförmig ist, wobei der ringförmige Anker (1) eine geradzahlige Anzahl von Polschuhen (7, 8, 9, 10, 7-1, 7-2, 8-1, 8-2) aufweist und der Läufer (2, 2-1, 2-2) ein Rotor (2, 2-1, 2-2) ist, der drehbar zum ringförmigen Anker (1) gelagert ist, vorzugsweise drehbar im Inneren des ringförmigen Ankers (1) gelagert ist, wobei sich die Spulen (3, 3-1, 3-2, 4, 4-1, 4-2) bereichsweise entlang des Umfangs des ringförmigen Ankers (1) erstrecken, so dass der ringförmige Anker (1) mit Hilfe der Spulen (3, 3-1, 3-2, 4, 4-1, 4-2) magnetisierbar ist.

7. Elektrischer Motor nach Anspruch 6, **dadurch gekennzeichnet, dass**
der Rotor (2, 2-1, 2-2) eine ganzzahlige Anzahl von magnetisierbaren Polen (7, 8, 9, 10, 7-1, 7-2, 8-1, 8-2) aufweist.

8. Elektrischer Motor nach Anspruch 6 oder 7, **dadurch gekennzeichnet, dass**
jeweils so viele Spulen (3, 3-1, 3-2, 4, 4-1, 4-2) zwischen zwei Polschuhen (7, 8, 9, 10, 7-1, 7-2, 8-1, 8-2) um ringförmigen Anker (1) angeordnet sind, die einem ganzzahligen Vielfachen der Anzahl der Polschuhe (7, 8, 9, 10, 7-1, 7-2, 8-1, 8-2) entsprechen.

9. Elektrischer Motor nach einem der Ansprüche 6 bis 8, **dadurch gekennzeichnet, dass**
der ringförmige Anker (1) und/oder der Rotor (2, 2-1, 2-2) eine geradzahlige Drehsymmetrie um die Drehachse des Rotors (2, 2-1, 2-2) aufweist oder aufweisen, die gleich der geradzahligen Anzahl der Polschuhe (7, 8, 9, 10, 7-1, 7-2, 8-1, 8-2) des ringförmigen Ankers (1) und/oder der geradzahligen Anzahl der Polenden (14) des Rotors (2, 2-1, 2-2) ist.

10. Elektrischer Motor nach einem der Ansprüche 1 bis 3, **dadurch gekennzeichnet, dass**
der elektrische Motor ein Linear-Motor mit einem linearen Anker (1) ist, und der lineare Anker (1) eine ungeradzahlige Anzahl von Polschuhen (7, 8, 9, 10, 7-1, 7-2, 8-1, 8-2, 8-3) aufweist, wobei zwischen jedem Polschuh (7, 8, 9, 10, 7-1, 7-2, 8-1, 8-2, 8-3) wenigstens eine Spule (3, 3-1, 3-2, 4, 4-1, 4-2) angeordnet ist, vorzugsweise zwischen jedem Polschuh (7, 8, 9, 10, 7-1, 7-2, 8-1, 8-2, 8-3) eine Spule (3, 3-1, 3-2, 4, 4-1, 4-2) angeordnet ist.

11. Elektrischer Motor nach Anspruch 10, **dadurch gekennzeichnet, dass**
der lineare Anker (1) einen Polschuh (7, 8, 9, 10, 7-1, 7-2, 8-1, 8-2, 8-3) mehr aufweist, als Spulen (3, 3-1, 3-2, 4, 4-1, 4-2) auf den linearen Motor gewickelt sind und zwischen zwei benachbarten Polschuhen (7, 8, 9, 10, 7-1, 7-2, 8-1, 8-2, 8-3) des Ankers (1) genau eine Spule (3, 3-1, 3-2, 4, 4-1, 4-2) angeordnet ist.

12. Elektrischer Motor nach einem der vorangehenden Ansprüche, **dadurch gekennzeichnet, dass**
zwischen zwei Polschuhen (7, 8, 9, 10, 7-1, 7-2, 8-1, 8-2, 8-3) des Ankers (1) immer die gleiche Anzahl von Spulenwindungen durch die Spulen (3, 3-1, 3-2, 4, 4-1, 4-2) gewickelt ist.

13. Elektrischer Motor nach einem der vorangehenden Ansprüche, **dadurch gekennzeichnet, dass**
der elektrische Leiter, aus dem die Spulen (3, 3-1, 3-2, 4, 4-1, 4-2) gewickelt sind einen gleichmäßigen Querschnitt aufweist, insbesondere eine Querschnitt mit einer Querschnittsabweichung von höchstens 20%, bevorzugt von höchstens 10%, besonders bevorzugt von höchstens 2%.

14. Elektrischer Motor nach einem der vorangehenden Ansprüche, **dadurch gekennzeichnet, dass**
das magnetisierbare Material des Ankers (1) und/oder des Läufers (2, 2-1, 2-2) aus elektrisch leitenden und voneinander elektrisch isolierten Schichten besteht, vorzugsweise aus elektrisch voneinander isolierten Stahlschichten, wobei zwischen den elektrisch leitenden Schichten ein Isolator angeordnet ist, vorzugsweise Kunststoffschichten zwischen den elektrisch leitenden Schichten angeordnet sind.

15. Verfahren zur Herstellung eines elektrischen Motors, insbesondere eines Reluktanzmotors, vorzugsweise nach einem der vorangehenden Ansprüche, bei dem
eine geradzahlige Anzahl von Spulen (3, 3-1, 3-2, 4, 4-1, 4-2) auf einen Anker (1) beinhaltend ein magnetisierbares Material aufgebracht werden, wobei die Spulen (3, 3-1, 3-2, 4, 4-1, 4-2) zwischen einer Vielzahl von Polschuhen (7, 8, 9, 10, 7-1, 7-2, 8-1, 8-2, 8-3) angeordnet werden, so dass die Wicklungen der Spulen (3, 3-1, 3-2, 4, 4-1, 4-2) den Anker (1) derart umschließen, dass sich die Spulen (3, 3-1, 3-2, 4, 4-1, 4-2) bereichsweise entlang des Ankers (1) erstrecken,
ein Läufer (2, 2-1, 2-2) beinhaltend ein magnetisierbares Material mit zumindest zwei Polenden (14) beweglich gegen den Anker (1) gelagert wird und die Spulen (3, 3-1, 3-2, 4, 4-1, 4-2) derart elektrisch miteinander verschaltet werden, dass bei Anlegen einer elektrischen Spannung an den Spulen (3, 3-1, 3-2, 4, 4-1, 4-2) die magnetischen Felder, die durch zwei zu einem Polschuh (7, 8, 9, 10, 7-1, 7-2, 8-1, 8-2, 8-3) benachbarten Spulen (3, 3-1, 3-2, 4, 4-1, 4-2) erzeugt werden, derart ausgerichtet sind, dass an dem dazwischen angeordneten Polschuh (7, 8, 9, 10, 7-1, 7-2, 8-1, 8-2, 8-3) die gleiche magnetische Polarisierung an dem Polschuh (7, 8, 9, 10, 7-1, 7-2, 8-1, 8-2, 8-3) von den beiden benachbarten Spulen (3, 3-1, 3-2, 4, 4-1, 4-2) erzeugt wird.

16. Verwendung eines elektrischen Motors nach einem der Ansprüche 1 bis 14, insbesondere eines Reluktanzmotors nach einem der Ansprüche 1 bis 14 zum Antreiben einer Bewegung einer Vorrichtung oder eines Teils einer Vorrichtung.

## Claims

1. Electric motor, in particular a reluctance motor, comprising
an armature (1), containing a magnetisable material, wherein the armature (1) has a plurality of pole shoes (7, 8, 9, 10, 7-1, 7-2, 8-1, 8-2, 8-3),
an rotor (2, 2-1, 2-2), which is arranged and mounted movably with respect to the armature (1), contains a magnetisable material and has at least two magnetisable pole ends (14), and
an even number of coils (3, 3-1, 3-2, 4, 4-1, 4-2), which are arranged between the pole shoes (7, 8, 9, 10, 7-1, 7-2, 8-1, 8-2, 8-3) and of which the windings surround the armature (1) in such a manner that the coils (3, 3-1, 3-2, 4, 4-1, 4-2) extend in regions along the armature (1), such that the armature (1) is magnetisable with the aid of the coils (3, 3-1, 3-2, 4, 4-1, 4-2), **characterised in that**
the coils (3, 3-1, 3-2, 4, 4-1, 4-2) are electrically interconnected in such a manner that, when an electrical voltage is applied to the coils (3, 3-1, 3-2, 4, 4-1, 4-2), the magnetic fields generated by two coils (3, 3-1, 3-2, 4, 4-1, 4-2) adjacent to one pole shoe (7, 8, 9, 10, 7-1, 7-2, 8-1, 8-2, 8-3) are oriented such that the same magnetic polarisation is produced by both coils (3, 3-1, 3-2, 4, 4-1, 4-2) at the pole shoe (7, 8, 9, 10, 7-1, 7-2, 8-1, 8-2, 8-3) arranged therebetween.

2. The electric motor according to Claim 1, **characterised in that**
the coils (3, 3-1, 3-2, 4, 4-1, 4-2) on the armature (1) are connected electrically in pairs in opposite directions and magnetically in pairs in parallel.

3. The electric motor according to one of the preceding claims, **characterised in that**
the armature (1) and/or the rotor (2, 2-1, 2-2) consist/consists of a magnetisable material and/or the magnetisable material of the armature (1) and/or of the rotor (2, 2-1, 2-2) has a magnetic permeability of at least 100 H/m, preferably a magnetic permeability of at least 1,000 H/m, particularly preferably a magnetic permeability of at least 10,000 H/m.

4. The electric motor according to one of the preceding claims, **characterised in that**
the number of pole shoes (7, 8, 9, 10, 7-1, 7-2, 8-1, 8-2) is identical to the number of pole ends (14).

5. The electric motor according to one of the preceding claims, **characterised in that**
the number of coils (3, 3-1, 3-2, 4, 4-1, 4-2) is equal to the number of pole shoes (7, 8, 9, 10, 7-1, 7-2, 8-1, 8-2) and/or the number of coils (3, 3-1, 3-2, 4, 4-1, 4-2) is an integer multiple of the number of pole shoes (7, 8, 9, 10, 7-1, 7-2, 8-1, 8-2).

6. The electric motor according to one of the preceding claims, **characterised in that**
the armature (1) is annular, wherein the annular armature (1) has an even number of pole shoes (7, 8, 9, 10, 7-1, 7-2, 8-1, 8-2) and the rotor (2, 2-1, 2-2) is a rotating rotor (2, 2-1, 2-2), which is mounted rotatably relative to the annular armature (1), preferably is mounted rotatably within the annular armature (1), wherein the coils (3, 3-1, 3-2, 4, 4-1, 4-2) extend in regions along the periphery of the annular armature (1), such that the annular armature (1) is magnetisable with the aid of the coils (3, 3-1, 3-2, 4, 4-1, 4-2).

7. The electric motor according to Claim 6, **characterised in that**
the rotor (2, 2-1, 2-2) has an integer number of magnetisable poles (7, 8, 9, 10, 7-1, 7-2, 8-1, 8-2).

8. The electric motor according to Claim 6 or 7, **characterised in that**
in each case just as many coils (3, 3-1, 3-2, 4, 4-1, 4-2) as correspond to an integer multiple of the number of pole shoes (7, 8, 9, 10, 7-1, 7-2, 8-1, 8-2) are arranged between two pole shoes (7, 8, 9, 10, 7-1, 7-2, 8-1, 8-2) around the annular armature (1).

9. The electric motor according to one of Claims 6 to 8, **characterised in that**
the annular armature (1) and/or the rotor (2, 2-1, 2-2) have/has an even-numbered rotational symmetry about the rotary axis of the rotor (2, 2-1, 2-2), which is equal to the even number of pole shoes (7, 8, 9, 10, 7-1, 7-2, 8-1, 8-2) of the annular armature (1) and/or the even number of pole ends (14) of the rotor (2, 2-1, 2-2).

10. The electric motor according to one of Claims 1 to 3, **characterised in that**
the electric motor is a linear motor with a linear armature (1), and the linear armature (1) has an odd number of pole shoes (7, 8, 9, 10, 7-1, 7-2, 8-1, 8-2, 8-3), wherein at least one coil (3, 3-1, 3-2, 4, 4-1, 4-2) is arranged between each pole shoe (7, 8, 9, 10, 7-1, 7-2, 8-1, 8-2, 8-3), and preferably one coil (3, 3-1, 3-2, 4, 4-1, 4-2) is arranged between each pole shoe (7, 8, 9, 10, 7-1, 7-2, 8-1, 8-2, 8-3).

11. The electric motor according to Claim 10, **characterised in that**
the linear armature (1) comprises one pole shoe (7, 8, 9, 10, 7-1, 7-2, 8-1, 8-2, 8-3) more than coils (3, 3-1, 3-2, 4, 4-1, 4-2) wound on the linear motor and exactly one coil (3, 3-1, 3-2, 4, 4-1, 4-2) is arranged between two adjacent pole shoes (7, 8, 9, 10, 7-1, 7-2, 8-1, 8-2, 8-3) of the armature (1).

12. The electric motor according to one of the preceding claims, **characterised in that**
the same number of coil windings by the coils (3, 3-1, 3-2, 4, 4-1, 4-2) is always wound between two pole shoes (7, 8, 9, 10, 7-1, 7-2, 8-1, 8-2, 8-3) of the armature.

13. The electric motor according to one of the preceding claims, **characterised in that**
the electrical conductor from which the coils (3, 3-1, 3-2, 4, 4-1, 4-2) are wound has a uniform cross section, in particular a cross section with a cross section deviation of at most 20 %, preferably of at most 10 %, particularly preferably of at most 2 %.

14. The electric motor according to one of the preceding claims, **characterised in that**
the magnetisable material of the armature (1) and/or of the rotor (2, 2-1, 2-2) consists of electrically conductive layers electrically insulated from one another, preferably of steel layers electrically insulated from one another, wherein an insulator is arranged between the electrically conductive layers, and preferably plastic layers are arranged between the electrically conductive layers.

15. A method for producing an electric motor, in particular a reluctance motor, preferably according to one of the preceding claims, in which
an even number of coils (3, 3-1, 3-2, 4, 4-1, 4-2) are applied to an armature (1) containing a magnetisable material, wherein the coils (3, 3-1, 3-2, 4, 4-1, 4-2) are arranged between a plurality of pole shoes (7, 8, 9, 10, 7-1, 7-2, 8-1, 8-2, 8-3), such that the windings of the coils (3, 3-1, 3-2, 4, 4-1, 4-2) surround the armature (1) in such a manner that the coils (3, 3-1, 3-2, 4, 4-1, 4-2) extend in regions along the armature (1)
an rotor (2, 2-1, 2-2) containing a magnetisable material having at least two pole ends (14) is mounted movably with respect to the armature (1) and
the coils (3, 3-1, 3-2, 4, 4-1, 4-2) are electrically interconnected in such a manner that, when an electrical voltage is applied to the coils (3, 3-1, 3-2, 4, 4-1, 4-2), the magnetic fields generated by two coils (3, 3-1, 3-2, 4, 4-1, 4-2) which are adjacent to a pole shoe (7, 8, 9, 10, 7-1, 7-2, 8-1, 8-2, 8-3) are oriented in such a manner that, at the pole shoe (7, 8, 9, 10, 7-1, 7-2, 8-1, 8-2, 8-3) arranged therebetween, the same magnetic polarisation is produced at the pole shoe (7, 8, 9, 10, 7-1, 7-2, 8-1, 8-2, 8-3) by the two adjacent coils (3, 3-1, 3-2, 4, 4-1, 4-2).

16. Use of an electric motor according to one of Claims 1 to 14, in particular a reluctance motor according to one of Claims 1 to 14, for driving a movement of a device or part of a device.

## Revendications

1. Moteur électrique, notamment moteur à reluctance, présentant
une armature (1) contenant un matériau magnétisable, où l'armature (1) présente un pluralité d'épanouissements polaires (7, 8, 9, 10, 7-1, 7-2, 8-1, 8-2, 8-3), une partie tournante (2, 2-1, 2-2) qui est disposée mobile contre l'armature (1) et y est logée, qui contient un matériau magnétisable et qui présente au moins deux extrémités de pôles (14) magnétisables, et
un nombre pair de bobines (3, 3-1, 3-2, 4, 4-1, 4-2), qui sont disposées entre les épanouissements polaires (7, 8, 9, 10, 7-1, 7-2, 8-1, 8-2, 8-3) et dont les enroulements entourent l'armature (1) de telle manière que les bobines (3, 3-1, 3-2, 4, 4-1, 4-2) s'étendent par endroits le long de l'armature (1)**,** de sorte que l'armature (1) peut être magnétisée à l'aide des bobines (3, 3-1, 3-2, 4, 4-1, 4-2),
**caractérisé en ce que**
les bobines (3, 3-1, 3-2, 4, 4-1, 4-2) sont électriquement en connexion de telle manière que, lors de l'application d'une tension électrique aux bobines (3, 3-1, 3-2, 4, 4-1, 4-2), les champs magnétiques, qui sont générés par deux bobines (3, 3-1, 3-2, 4, 4-1, 4-2) voisines d'un épanouissement polaire (7, 8, 9, 10, 7-1, 7-2, 8-1, 8-2, 8-3), sont orientés de telle façon que, sur l'épanouissement polaire (7, 8, 9, 10, 7-1, 7-2, 8-1, 8-2, 8-3) disposé entre celles-ci, la même polarisation magnétique est générée par les deux bobines (3, 3-1, 3-2, 4, 4-1, 4-2).

2. Moteur électrique selon la revendication 1, **caractérisé en ce que**
les bobines (3, 3-1, 3-2, 4, 4-1, 4-2) sont branchées électriquement par paires en sens inverse et magnétiquement par paire en parallèle sur l'armature (1).

3. Moteur électrique selon l'une des revendications précédentes, **caractérisé en ce que** l'armature (1) et/ou la partie tournante (2, 2-1, 2-2) est constituée ou sont constituées d'un matériau magnétisable et/ou le matériau magnétisable de l'armature (1) et/ou de la partie tournante (2, 2-1, 2-2) présente une perméabilité magnétique d'au moins 100 H/m, de préférence, une perméabilité magnétique d'au moins 1000 H/m, de manière particulièrement préférée, une perméabilité magnétique d'au moins 10 000 H/m.

4. Moteur électrique selon l'une des revendications précédentes, **caractérisé en ce que** le nombre d'épanouissements polaires (7, 8, 9, 10, 7-1, 7-2, 8-1, 8-2, 8-3) est égal au nombre d'extrémités de pôles (14).

5. Moteur électrique selon l'une des revendications précédentes, **caractérisé en ce que** le nombre de bobines (3, 3-1, 3-2, 4, 4-1, 4-2) est égal au nombre d'épanouissements polaires (7, 8, 9, 10, 7-1, 7-2, 8-1, 8-2, 8-3) et/ou le nombre de bobines (3, 3-1, 3-2, 4, 4-1, 4-2) est un multiple entier du nombre d'épanouissements polaires (7, 8, 9, 10, 7-1, 7-2, 8-1, 8-2, 8-3).

6. Moteur électrique selon l'une des revendications précédentes, **caractérisé en ce que** l'armature (1) est de forme annulaire, où l'armature (1) annulaire présente un nombre pair d'épanouissements polaires (7, 8, 9, 10, 7-1, 7-2, 8-1, 8-2) et la partie tournante (2, 2-1, 2-2) est un rotor (2, 2-1, 2-2), qui est logé, en pouvant tourner, en plus de l'armature (1) annulaire, de préférence, en pouvant tourner à l'intérieur de l'armature (1) annulaire, où les bobines (3, 3-1, 3-2, 4, 4-1, 4-2) s'étendent par endroits le long du périmètre l'armature (1) annulaire, de sorte que l'armature (1) annulaire peut être magnétisée à l'aide des bobines (3, 3-1, 3-2, 4, 4-1, 4-2).

7. Moteur électrique selon la revendication 6, **caractérisé en ce que** le rotor (2, 2-1, 2-2) présente un nombre entier de pôles magnétisables (7, 8, 9, 10, 7-1, 7-2, 8-1, 8-2).

8. Moteur électrique selon la revendication 6, ou 7, **caractérisé en ce que**
chaque fois, autant de bobines (3, 3-1, 3-2, 4, 4-1, 4-2) sont agencées entre deux épanouissements polaires (7, 8, 9, 10, 7-1, 7-2, 8-1, 8-2) autour d'armatures (1) annulaires qu'elles correspondent à un multiple entier du nombre d'épanouissements polaires (7, 8, 9, 10, 7-1, 7-2, 8-1, 8-2).

9. Moteur électrique selon l'une des revendications 6 à 8, **caractérisé en ce que** l'armature (1) annulaire et/ou le rotor (2, 2-1, 2-2) présente, ou présentent, une symétrie de rotation entière autour de l'axe de rotation du rotor (2, 2-1, 2-2), qui est égale au nombre pair d'épanouissements polaires (7, 8, 9, 10, 7-1, 7-2, 8-1, 8-2) de l'armature (1) annulaire et/ou au nombre pair d'extrémités de pôles (14) du rotor (2, 2-1,2-2).

10. Moteur électrique selon l'une des revendications 1 à 3, **caractérisé en ce que** le moteur électrique est un moteur linéaire avec une armature (1) linéaire, et l'armature (1) linéaire présente un nombre impair d'épanouissements polaires (7, 8, 9, 10, 7-1, 7-2, 8-1, 8-2, 8-3), où, entre chaque épanouissement polaire (7, 8, 9, 10, 7-1, 7-2, 8-1, 8-2, 8-3), il y a au moins une bobine (3, 3-1, 3-2, 4, 4-1, 4-2), de préférence, entre chaque épanouissement polaire (7, 8, 9, 10, 7-1, 7-2, 8-1, 8-2, 8-3), il y a une bobine (3, 3-1, 3-2, 4, 4-1, 4-2).

11. Moteur électrique selon la revendication 10, **caractérisé en ce que**
l'armature (1) linéaire présente un épanouissement polaire (7, 8, 9, 10, 7-1, 7-2, 8-1, 8-2, 8-3) de plus que de bobines (3, 3-1, 3-2, 4, 4-1, 4-2) enroulées sur le moteur linéaire et qu'entre deux épanouissements polaires (7, 8, 9, 10, 7-1, 7-2, 8-1, 8-2, 8-3) voisins de l'armature (1), exactement une bobine (3, 3-1, 3-2, 4, 4-1, 4-2) est disposée.

12. Moteur électrique selon l'une des revendications précédentes, **caractérisé en ce qu'**entre deux épanouissements polaires (7, 8, 9, 10, 7-1, 7-2, 8-1, 8-2, 8-3) de l'armature (1), toujours le même nombre d'enroulements de bobine est enroulé par les bobines (3, 3-1, 3-2, 4, 4-1, 4-2).

13. Moteur électrique selon l'une des revendications précédentes, **caractérisé en ce que** le conducteur électrique, dont sont enroulées les bobines (3, 3-1, 3-2, 4, 4-1, 4-2) présente une section transversale uniforme, en particulier, une section transversale avec un écart de section transversale d'au maximum 20 %, de préférence, d'au maximum 10 %, de manière particulièrement préférée d'au maximum 2 %.

14. Moteur électrique selon l'une des revendications précédentes, **caractérisé en ce que** le matériau magnétisable de l'armature (1) et/ou de la partie tournante (2, 2-1, 2-2) est constitué de couches électriquement conductrices et électriquement isolées séparées les unes des autres, de préférence, de couches en acier isolées électriquement les unes des autres, où un isolateur est disposé entre les couches électriquement conductrices, de préférence des couches en matière plastique sont disposées entre les couches électriquement conductrices.

15. Procédé de fabrication d'un moteur électrique, notamment un moteur à reluctance, de préférence selon l'une des revendications précédentes, chez lequel
un nombre pair de bobines (3, 3-1, 3-2, 4, 4-1, 4-2) est rapporté sur une armature (1) contenant un matériau magnétisable, où les bobines (3, 3-1, 3-2, 4, 4-1, 4-2) sont disposées entre un grand nombre d'épanouissements polaires (7, 8, 9, 10, 7-1, 7-2, 8-1, 8-2, 8-3), de sorte que les enroulements des bobines (3, 3-1, 3-2, 4, 4-1, 4-2) entourent l'armature (1) de telle façon que les bobines (3, 3-1, 3-2, 4, 4-1, 4-2) s'étendent par endroits le long de l'armature (1),
une partie tournante (2, 2-1, 2-2) contenant un matériau magnétisable avec au moins deux extrémités de pôles (14) logées mobiles contre l'armature (1) et les bobines (3, 3-1, 3-2, 4, 4-1, 4-2) sont électriquement connectées les unes aux autres que, lors de l'application d'une tension électrique sur les bobines (3, 3-1, 3-2, 4, 4-1, 4-2), les champs magnétiques, qui sont générés par deux bobines (3, 3-1, 3-2, 4, 4-1, 4-2) voisines par rapport à un épanouissement polaire (7, 8, 9, 10, 7-1, 7-2, 8-1, 8-2, 8-3), sont orientés de telle façon que, sur l'épanouissement polaire (7, 8, 9, 10, 7-1, 7-2, 8-1, 8-2, 8-3) disposé entre elles, la même polarisation magnétique est générée sur l'épanouissement polaire (7, 8, 9, 10, 7-1, 7-2, 8-1, 8-2, 8-3) par les deux bobines (3, 3-1, 3-2, 4, 4-1, 4-2) voisines.

16. Utilisation d'un moteur électrique selon l'une des revendications 1 à 14, notamment, d'un moteur à reluctance selon l'une des revendications 1 à 14 pour l'entraînement d'un mouvement d'un dispositif ou d'une partie de dispositif.
